Europäisches Patentamt

European Patent Office

Office européen des brevets

(11) Publication number : **0 495 601 B1**

# EUROPEAN PATENT SPECIFICATION

(45) Date of publication of patent specification :
27.09.95 Bulletin 95/39

(51) Int. Cl.⁶ : **H02P 5/168,** H02P 5/172, H02H 7/093, H02H 7/09, E05F 15/16, E05F 15/00

(21) Application number : 92300257.0

(22) Date of filing : 10.01.92

(54) Control circuit for a DC motor.

Divisional application 94101329.4 filed on 10/01/92.

(30) Priority : 18.01.91 JP 18382/91
18.01.91 JP 18384/91
16.02.91 JP 44370/91

(43) Date of publication of application :
22.07.92 Bulletin 92/30

(45) Publication of the grant of the patent :
27.09.95 Bulletin 95/39

(84) Designated Contracting States :
DE FR GB IT

(56) References cited :
EP-A- 0 345 914
FR-A- 1 390 166
FR-A- 1 452 353
FR-A- 2 646 459
US-A- 3 924 166
US-A- 4 725 765

(56) References cited :
INSTRUMENTS AND EXPERIMENTAL TECHNIQUES vol. 28, no. 5, part 2, September-October 1985, page 1225, New York, US; I.V. BONDALETOVA et al.: "Independant Power Supply for Electric-Discharge Magnetic Pump"

(73) Proprietor : KABUSHIKI KAISHA RIKEN
13-5, Kudan-Kita 1-chome
Chiyoda-ku Tokyo (JP)

(72) Inventor : Yaguchi, Osamu, c/o Kabushiki Kaisha Riken
Kashiwazaki Division, 37,
Hokutocho 1-chome
Kashiwazaki-shi, Niigata-ken (JP)
Inventor : Arakawa, Mitsunori, c/o Kabushiki Kaisha Riken
Kashiwazaki Division, 37,
Hokutocho 1-chome
Kashiwazaki-shi, Niigata-ken (JP)

(74) Representative : Jackson, David Spence et al
REDDIE & GROSE
16, Theobalds Road
London, WC1X 8PL (GB)

## Description

### Field of the Invention

The present invention relates to a circuit for controlling a DC electric motor comprising:

a DC power supply circuit having a live line providing a supply voltage and a return line;

a drive transistor connected to the return line and to a signal terminal and arranged to be in series with the DC electric motor through the signal terminal;

trigger means for causing the DC supply circuit through the motor to be completed momentarily to start the motor;

supply latching means for comparing a terminal voltage at said signal terminal with a first voltage derived from the supply voltage and supplying a supply latching output for the drive transistor while a predetermined relationship holds between the said first voltage and the terminal voltage; and

means for periodically turning off the drive transistor whereby the voltage at the signal terminal is correspondingly periodically representative of the condition of the motor.

### Prior Art

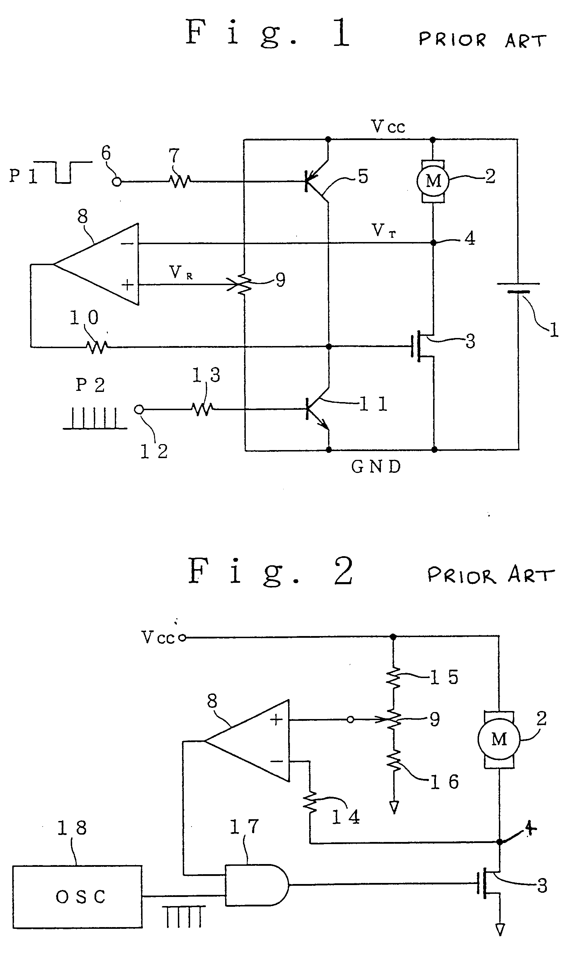

Referring now to Figure 1, a circuit for controlling the restraining torque of a DC motor disclosed in Japanese laid-open patent application no. JP-A-1-311883 is generally shown, which is a circuit of the kind defined above. A DC power supply 1 is connected between a Vcc line and ground or GND. A DC motor 2 is connected between the Vcc line and the drain of an N-channel MOSFET (Metal Oxide Semiconductor Field Effect Transistor) 3 at a relay terminal 4. The MOSFET 3 has its source connected to ground and its gate connected to the collector of a PNP transistor 5. The PNP transistor 5 has its emitter connected to the Vcc line and its base connected to an input terminal 6 via a resistor 7. When a negative trigger pulse P1 is supplied to the input terminal 6, the PNP transistor 5 is turned on to make the MOSFET 3 turn on. The MOSFET 3 in its ON state passes current to the DC motor 2 and the motor 2 rotates during the application of the negative trigger pulse P1.

A comparator 8 for maintaining the rotation of the DC motor 2 is connected between the Vcc line and ground via a supply bus (not shown). The comparator 8 has its inverting input connected to the relay terminal 4 or the drain of the MOSFET 3, its non-inverting input connected to a movable terminal of a variable resistor 9 connected between the Vcc line and ground, and an output connected to the gate of the MOSFET 3 via a resistor 10. The comparator 8 compares the terminal voltage $V_T$ of the relay terminal 4 with the reference voltage $V_R$ at the movable terminal of the variable resistor 9. The terminal voltage $V_T$ is defined by subtracting the induced voltage $V_I$ from Vcc. The comparator 8 outputs a logical "H" when $V_T < V_R$. Therefore, once the negative trigger pulse P1 is applied to the trigger terminal 6 and the MOSFET 3 is turned on, the drain voltage $V_T$ at the terminal 4 becomes a saturated voltage which is lower than the reference voltage $V_R$, and therefore the comparator 8 supplies "H" to the gate of the MOSFET 3 to latch the MOSFET 3 in its ON state and thus maintains the DC motor 2 in rotation.

The DC motor 2 generates pulses each of an absolute induced voltage $V_I$ depending upon the rotation rate during the rotation thereof. Each pulse has a pair of negative and positive pulse components when the rotor of the DC motor 2 upon rotating comes to a predetermined angular position relative to a stator thereof. Even if momentarily the MOSFET 3 does not supply power to the rotating DC motor 2, the rotating DC motor 2 will rotate by inertia and will generate these pulses.

An NPN transistor 11 is provided to periodically turn off the MOSFET 3 and to check the rotation condition of the DC motor 2 with the comparator 8. The NPN transistor 11 has its collector connected to the gate of MOSFET 3, its emitter connected to ground and its base connected to a clock terminal 12 via a resistor 13. Positive clock pulses P2 are periodically applied to the clock terminal 12 to provide comparison periods in which the NPN transistor 11 is turned on to make the MOSFET 3 correspondingly turn off.

Upon the application of a positive clock pulse, the MOSFET 3 is turned off and the comparator 8 continues to compare the terminal voltage $V_T$ with reference voltage $V_R$. If $V_T$ is lower than $V_R$, then the comparator 8 provides an "H" level to the gate of the MOSFET 3 after the end of the comparison period and the MOSFET 3 returns to the latched condition. If $V_T$ is higher than $V_R$, then the comparator 8 provides an "L" level to the gate of the MOSFET 3 after the end of the comparison period and the MOSFET 3 remains in a turned OFF condition. If the DC motor 2, controlled by the MOSFET 3, drives a window glass to close a door window of a vehicle, the window glass being moved for example up to close the window in response to the trigger pulse P1, then the DC motor 2 continues to rotate by inertia notwithstanding that periodic positive clock pulses are applied, unless the window glass meets with an obstacle against a frame of the window.

If the periodic clock pulses are not applied to the terminal 12 and the window glass meets with an obstacle against the frame of the window, the stopping of the rotating DC motor 2 while it is receiving power damages the obstacle, and internal coils of the DC motor 2 may be burned out by current passing through the DC motor 2 whilst it is stationary.

However, because of the application of the periodic clock pulses to the terminal 42 and the fact that DC motor 2 does not generate the induced voltage when stopped, the latch condition provided between the comparator 8 and the MOSFET 3 for supplying the power thereto is released when the motor 2 is stopped by an obstacle.

Referring now to Figure 2, a second circuit for controlling a DC motor, which is described in Japanese patent application No. 2-5401 filed on January 23, 1990, is generally shown. In Figure 2, components corresponding to those of Figure 1 have the same numerals respectively and detail descriptions are omitted. A resistor 14 is connected between the relay terminal 4 and the inverting input of the comparator 8. Two resistors 15 and 16 each connected to a respective one of the fixed terminals of the variable resistor 9 are connected to the Vcc line and ground respectively to provide a fine adjustment of the reference voltage $V_R$ (finer than that of Figure 1). The wired AND function provided by the resistor 10 and the NPN transistor 11 in Figure 1 is replaced by a two-input AND gate 17. The AND gate 17 has its output connected to the gate of MOSFET 3, one input connected to the output of the comparator 8, and another input connected to an oscillator 18 for providing negative periodic clock pulses. Also, the PNP transistor 5 not shown in Figure 2 may be added with its collector connected to the gate of MOSFET 3, its emitter connected to the Vcc line and its base connected to the input terminal 6 via the resistor 7 as shown in Figure 1.

Operation of the control circuit shown in Figure 2 is identical to that of Figure 1 and detailed description of the operation is omitted.

These control circuit are advantageous compared to a conventional circuit having a series resistor passing supply current to a DC motor because the series resistor, although employed for monitoring the DC motor current, causes serious loss of the current, which degrades the efficiency of the circuit.

Such a motor 2 is generally employed as drive means for a power or automatic window, while as its power source a secondary battery is used such as the DC power supply battery of the vehicle. This battery has many electrical connections to equipment installed in the vehicle such as a cooler, a dynamo, head lights, a car-radio, etc. The voltage of the Vcc line connected to the battery changes when any such piece of equipment is turned on or off. This change in Vcc causes a change in the restraining torque of the DC motor, a higher power supply voltage causing an increased restraining torque, and a lower power supply voltage causing a decreased restraining torque.

In Figures 1 and 2, there is a critical or minimum motor current Imin at which rotation of the DC motor 2 is maintained or not. This current Imin is defined by:

$$\text{Imin} = (\text{Vcc} - V_I) / \text{Rm} = V_R / \text{Rm}$$

where Vcc denotes a power supply voltage, $V_I$ denotes an induced voltage, and Rm denotes an internal resistance of the DC motor 2. Therefore, the restraining torque depends upon the critical current $I_{min}$. The critical current changes with a change in the reference voltage $V_R$ and accordingly with a change in the power supply voltage Vcc.

The circuits as shown in Figures 1 and 2 can control the restraining torque of the motor but cannot control the rotation rate or speed. It is not practical to control the rotation rate by using a dynamo directly connected to a shaft of the DC motor because of high cost.

The circuit shown in Figure 1 or 2 generally needs a direct current (DC) power supply. In a vehicle such as an automobile, the DC power supply is often obtained from an AC power supply such as an alternating current generator or dynamo with a rectifying circuit which provides a pulsating power supply from the AC power supply and a smoothing capacitor or battery for smoothing the pulsating power. The oscillator 18 comprising an unstable multivibrator, e.g. a 555 available from Signetics or a crystal oscillator and clock dividers, should be omitted because the circuit is more complex and the mean time between failures MTBF will be increased if the oscillator 18 is omitted. Power is consumed in the control circuit mainly by the pulse oscillator and comparator and is not negligible.

According to the present invention, there is provided a circuit of the kind defined hereinbefore at the beginning and characterised in that there is also latch disabling means for controlling the coupling of the supply latch means to the drive transistor and including means for so comparing the said first voltage with a second voltage derived from and representative of the supply voltage as to set the drive transistor in its OFF state while a predetermined relationship holds between the said second voltage and the said first voltage, the said first voltage being a regulated reference voltage.

A better understanding of the present invention can be obtained when the following detailed description of the preferred embodiments is considered in conjunction with following drawings, in which:

Figures 1 and 2 are schematic diagrams showing prior control circuits of DC motors;

Figure 3 is a schematic diagram of a circuit for controlling a DC motor showing a first embodiment of the invention; and

Figure 4 is a schematic diagram of a second embodiment similar to that of Figure 3.

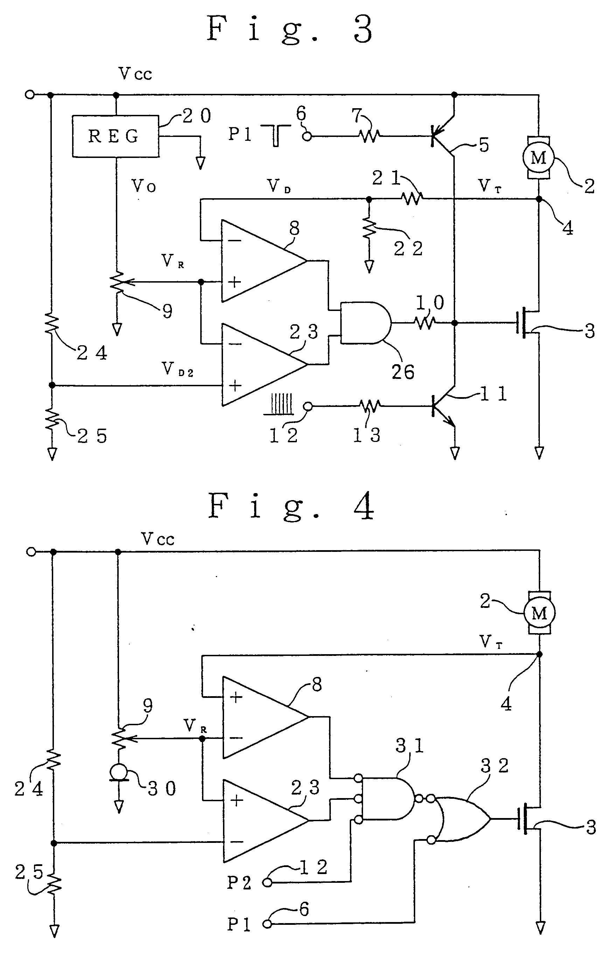

Figure 3 shows a first embodiment of the invention, that is, a circuit for controlling a DC motor. In Figures 3 and 4 the same reference numerals are used to denote the same components or parts as those in the prior art shown in Figures 1 and 2 and detail descriptions are omitted.

In Figure 3, a voltage regulator 20 is connected at its output to the variable resistor 9 to provide a regulated reference voltage $V_R$ for the comparator 8. The voltage regulator 20 is constructed as for example a 5 volt three terminal type IC (Integrated Circuit) or discrete circuit, its input being connected to the Vcc line and its common terminal being connected to ground to supply a regulated voltage Vo (Vo = 5 V) to the variable resistor 9 after buffering or absorbing any voltage change on the Vcc line. The variable resistor 9 therefore has its fixed terminals connected to the output of the voltage regulator 20 and ground respectively, and its movable terminal or tap connected to a noninverting input of the comparator 8 to supply the reference voltage $V_R$ thereto. The inverting input of the comparator 8 receives a divided voltage $V_D$ obtained by dividing the terminal voltage $V_T$ (or Vcc - $V_I$) of the terminal 4 by two resistors 21 and 22. The resistor 21 therefore is connected between the terminal 4 and the inverting input while the resistor 22 is connected between the inverting input and ground.

Additionally, the reference voltage $V_R$ is also applied to the inverting input of a second comparator 23 to check the power supply voltage. The non-inverting input of the second comparator 23 receives a second divided voltage $V_{D2}$ obtained by dividing the power supply voltage Vcc by two resistors 24 and 25. The resistor 24 therefore is connected between the Vcc line and the non-inverting input while the resistor 25 is connected between the non-inverting input and ground. The second comparator 23 compares the reference voltage $V_R$ with the second divided voltage $V_{D2}$ and outputs a logical "H" to one input of a two-input AND gate 26 when $V_{D2} > V_R$. The AND gate 26 has its second input connected to the output of the comparator 8 and its output connected to the gate of the MOSFET 3 via the resistor 10.

Operation of the first embodiment will now be described.

In Figure 3, a critical or minimum current $I_{min}$ determining whether rotation of the DC motor 2 is maintained or not is given by:

$$I_{min} = (Vcc - V_I)/Rm = (Rl + R2) \times V_R / (Rl \times Rm)$$

where Vcc denotes the power supply voltage, $V_I$ denotes an induced voltage, Rm denotes an internal resistance of the DC motor 2, and R1 and R2 denote resistances of the resistors 21 and 22 respectively. The restraining torque depends upon the critical current $I_{min}$. The restraining torque does not change when Vcc-$V_I$ is constant even if Vcc changes. Also, the restraining torque does not change when the reference voltage $V_R$ is constant even if Vcc changes.

In Figure 3, the regulated output voltage Vo of the voltage regulator or regulating element 20 is applied to the variable resistor 9 to provide the reference or a restraining torque setting voltage $V_R$. Because the regulated output voltage Vo is lower than the power supply voltage Vcc, resistors 21 and 22 are needed to apply a divided voltage from the terminal voltage $V_T$ (or Vcc - $V_I$) at the inverting input of the comparator 8 for sufficient torque to be generated by the DC motor 2. The resistances of the resistors 21 and 22 are determined so that the maximum torque is obtained with Vo > $V_D$ upon stopping the DC motor 2.

The second comparator 23 solves the problem that the output of the comparator 8 is always logical "H" if Vcc falls low enough for $V_R > V_D$ to be true even when the motor 2 is stopped. The values of the resistors 24 and 25 each connected to the noninverting input of the second comparator 23 are such that R3/R4 > (Rl + Rm)/R2, where R3 and R4 denote the values of the resistors 24 and 25 respectively.

With the values of the resistors 21, 22, 24 and 25 being as given above, the reference voltage $V_R$ is higher than the second divided voltage $V_{D2}$ before the reference voltage $V_R$ becomes higher than the divided voltage $V_D$ with the motor 2 stopped. The output of the comparator 23 then goes low to make the MOSFET 3 turn off to shut off power supply to the DC motor 2. The second comparator 23 thus determines the minimum voltage of the Vcc line for operation of the motor 2.

The AND gate 26 may be replaced by a two-input NOR gate if the respective signals applied to the inverting and noninverting inputs of the comparators 8 and 23 are exchanged.

According to the first embodiment of the present invention, there is an advantage in that the restraining torque of the motor 2 does not change if the power supply voltage is changed. Another advantage is that unstable motor operation by low power supply voltage is avoided due to the second comparator.

Referring now to Figure 4, a second embodiment is generally shown. A current regulated diode (CRD) or current source 30 is provided to replace the voltage regulator 20 in Figure 3 to provide a regulated reference voltage $V_R$ in conjunction with the variable resistor 9. The resistor 9 is connected for example to the Vcc line and the anode of the CRD 30 while the cathode of the CRD is connected to ground.

A three-input OR gate 31 replaces the AND gate 26, NPN transistor 11 and resistor 13 of Figure 3 when respective signals applied to the inverting and noninverting inputs of the comparator 8 or 23 are exchanged. Three inputs of the OR gate 31 are supplied by the outputs of respectively, the comparators 8 and 23, and the clock terminal 12 for the periodic pulse P2.

A two-input NAND gate 32 replaces the PNP transistor 5 and resistor 7 of Figure 3. Two inputs of the NAND gate 32 are supplied by the output of the OR gate 31 and the trigger terminal 6 for P1. The output of the NAND gate 32 is connected to the gate of the MOSFET 3.

## Claims

1.  A circuit for controlling a DC electric motor comprising:

a DC power supply circuit having a live line providing a supply voltage (Vcc) and a return line (GND);

a drive transistor (3) connected to the return line (GND) and to a signal terminal (4) and arranged to be in series with the DC electric motor (2) through the signal terminal (4);

trigger means (6,7,5;32) for causing the DC supply circuit through the motor (2) to be completed momentarily to start the motor (2);

supply latching means (8,9) for comparing a terminal voltage ($V_T$) at said signal terminal (4) with a first voltage ($V_R$) derived from the supply voltage (Vcc) and supplying a supply latching output for the drive transistor (3) while a predetermined relationship holds between the said first voltage ($V_R$) and the terminal voltage ($V_T$); and

means (11,12,13; 12,32) for periodically turning off the drive transistor (3) whereby the voltage at the signal terminal (4) is correspondingly periodically representative of the condition of the motor (2), characterized in that there is also

latch disabling means (23,26; 23,31) for controlling the coupling of the supply latching means (8,9) to the drive transistor (3) and including means (23) for so comparing the said first voltage ($V_R$) with a second voltage ($V_{D2}$) derived from and representative of the supply voltage (Vcc) as to set the drive transistor (3) in its OFF state while a predetermined relationship holds between the said second voltage ($V_{D2}$) and the said first voltage ($V_R$), the said first voltage ($V_R$) being a regulated reference voltage.

2. A circuit according to claim 1, characterised in that the comparing means (23) of the latch disabling means (23,26; 23,31) operates to set the drive transistor (3) in its OFF state while the said second voltage ($V_{D2}$) is lower than the said first voltage ($V_R$).

3. A circuit according to claim 2, characterised in that a regulator means (20;30) is connected in series with a resistor (9) across the DC power supply circuit, the said resistor (9) having an adjustable contact for supplying the said first voltage ($V_R$).

4. A circuit according to claim 2 or 3, characterised in that the supply latching means includes a voltage divider means (21,22) coupling the signal terminal (4) to one input of a comparator (8) having its other input supplied with the said first voltage ($V_R$).

5. A circuit according to any preceding claim characterised in that a voltage divider means (24,25) is connected between the live and return lines (Vcc, GND) to provide the said second voltage ($V_{D2}$).

**Patentansprüche**

1. Steuerschaltung für einen elektrischen Gleichstrommotor, enthaltend:
   - eine Gleichstromsversorgungsschaltung mit einer spannungsführenden Leitung zur Lieferung einer Versorgungsspannung (Vcc) und einer Rückleitung (GND);
   - einen Treibertransistor (3), der mit der Rückleitung (GND) und einem Signalanschluß (4) verbunden ist und in Reihe mit dem elektrischen Gleichstrommotor (2) über den Signalanschluß (4) liegt;
   - Triggermittel (6, 7, 5; 32) zur augenblicklichen Schließung der Gleichstromversorgungsschaltung über den Motor (2), um den Motor (2) zu starten;
   - Versorgungshaltemittel (8, 9), die eine Anschlußspannung ($V_T$) am Signalanschluß (4) mit einer von der Versorgungsspannung (Vcc) abgeleiteten ersten Spannung ($V_R$) vergleichen und ein Versorgungshaltesignal zum Treibertransistor (3) ausgeben, während eine vorbestimmte Beziehung zwischen der ersten Spannung ($V_R$) und der Anschlußspannung ($V_T$) gilt; und
   - Mittel (11, 12, 13; 12, 32) zum periodischen Ausschalten des Treibertransistors (3), wodurch die Spannung am Signalanschluß (4) entsprechend periodisch den Zustand des Motors (2) repräsentiert;
   **gekennzeichnet durch**
   - Halteabschaltmittel (23, 26; 23, 31) zur Steuerung der Kopplung der Versorgungshaltemittel (8, 9) mit dem Treibertransistor (3), und enthaltend Mittel (23) zum Vergleichen der ersten Spannung ($V_R$) mit einer von der Versorgungsspannung (Vcc) abgeleiteten und sie repräsentierenden zweiten Spannung ($V_{D2}$), um den Treibertransistor (3) in seinen Ausschaltzustand zu setzen, während eine vorbestimmte Beziehung zwischen der zweiten Spannung ($V_{D2}$) und der ersten Spannung ($V_R$) gilt, wobei die erste Spannung ($V_R$) eine geregelte Referenzspannung ist.

2. Steuerschaltung nach Anspruch 1, **dadurch gekennzeichnet,** daß die Vergleichsmittel (23) der Halteabschaltmittel (23, 26; 23, 31) den Treibertransistor (3) in seinen Ausschaltzustand setzen, solange die zweite Spannung ($V_{D2}$) kleiner ist als die erste Spannung ($V_R$).

3. Steuerschaltung nach Anspruch 2, **dadurch gekennzeichnet**, daß eine Regeleinrichtung (20; 30) in Reihe mit einem Widerstand (9) quer zur Gleichstromversorgungsschaltung liegt, wobei der Widerstand (9) einen einstellbaren Abgriff zur Lieferung der ersten Spannung ($V_R$) aufweist.

4. Steuerschaltung nach Anspruch 2 oder 3, **dadurch gekennzeichnet**, daß die Versorgungshaltemittel einen Spannungsteiler (21, 22) aufweisen, der den Signalanschluß (4) mit einem Eingang eines Komparators (8) koppelt, der an seinem anderen Eingang die erste Spannung ($V_R$) empfängt.

5. Steuerschaltung nach einem der vorhergehenden Ansprüche, **dadurch gekennzeichnet**, daß ein Spannungsteiler (24, 25) zwischen der spannungsführenden Leitung (Vcc) und der Rückleitung (GND) liegt, um die zweite Spannung ($V_{D2}$) zu liefern.

**Revendications**

1. Circuit de commande d'un moteur électrique à courant continu, comprenant :

   un circuit d'alimentation en courant continu ayant une ligne sous tension qui transmet une tension d'alimentation (Vcc) et une ligne de retour (GND),

   un transistor de pilotage (3) connecté à la ligne de retour (GND) et à une borne (4) de signaux et destiné à être monté en série avec le moteur électrique à courant continu (2) par la borne de signaux (4),

   un dispositif de déclenchement (6, 7, 5 ; 32) destiné à provoquer la connexion temporaire du circuit d'alimentation en courant continu au moteur (2) afin que le moteur (2) soit mis en fonctionnement,

   un dispositif (8, 9) de verrouillage d'alimentation destiné à comparer une tension de borne ($V_T$) existant à la borne de signaux (4) à une première tension ($V_R$) dérivée de la tension d'alimentation (Vcc), et à transmettre un signal de sortie du verrouillage d'alimentation destiné au transistor de pilotage (3) lorsque la relation prédéterminée entre la première tension ($V_R$) et la tension de borne ($V_T$) est obtenue, et

   un dispositif (11, 12, 13 ; 12, 32) destiné à mettre périodiquement le transistor de pilotage (3) à l'état non conducteur de manière que la tension à la borne de signaux (4) soit représentative de l'état du moteur (2) périodiquement et de manière correspondante, caractérisé en ce qu'il comprend aussi

   un dispositif (23, 26 ; 23, 31) d'inhibition de bascule destiné à commander le couplage du dispositif de verrouillage d'alimentation (8, 9) au transistor de pilotage (3) et comprenant un dispositif (23) destiné à comparer la première tension ($V_R$) à une seconde tension ($V_{D2}$) dérivée de la tension d'alimentation (Vcc) et représentative de celle-ci afin que le transistor de pilotage (3) soit mis à l'état non conducteur lorsqu'une relation prédéterminée existe entre la seconde tension ($V_{D2}$) et la première tension ($V_R$), la première tension ($V_R$) étant une tension régulée de référence.

2. Circuit selon la revendication 1, caractérisé en ce que le dispositif de comparaison (23) du dispositif d'inhibition de bascule (23, 26 ; 23, 31) fonctionne de manière qu'il mette le transistor de pilotage (3) à l'état non conducteur lorsque la seconde tension ($V_{D2}$) est inférieure à la première tension ($V_R$).

3. Circuit selon la revendication 2, caractérisé en ce qu'un dispositif régulateur (20 ; 30) est connecté en série avec une résistance (9) aux bornes du circuit d'alimentation en courant continu, la résistance (9) ayant un contact réglable destiné à transmettre la première tension ($V_R$) .

4. Circuit selon la revendication 2 ou 3, caractérisé en ce que le dispositif de verrouillage d'alimentation comporte un dispositif diviseur de tension (21, 22) destiné à coupler la borne de signaux (4) à une première entrée d'un comparateur (8) dont l'autre entrée reçoit la première tension ($V_R$).

5. Circuit selon l'une quelconque des revendications précédentes, caractérisé en ce qu'un dispositif diviseur de tension (24, 25) est connecté entre la ligne sous tension et la ligne de retour (Vcc, GND) pour la formation de la seconde tension ($V_{D2}$).

# Fig. 1 PRIOR ART

# Fig. 2 PRIOR ART

# Fig. 3

# Fig. 4